# EUROPÄISCHE PATENTSCHRIFT

(11) **EP 1 381 884 B1**
(45) Veröffentlichungstag und Bekanntmachung des Hinweises auf die Patenterteilung: **05.01.2011**
(21) Anmeldenummer: 02729858.7
(22) Anmeldetag: 09.04.2002
(51) Int. Cl.: G01S 13/93, B60R 21/01, B60K 31/00, B60Q 1/48

(54) **MEHRZWECK-FAHRERASSISTENZSYSTEM (EINPARKHILFE, PRE-CRASH UND GESCHWINDIGKEITSREGELUNG) FÜR EIN KRAFTFAHRZEUG**
MULTI-PURPOSE DRIVER ASSIST SYSTEM FOR A MOTOR VEHICLE
SYSTEME POLYVALENT D'ASSISTANCE AU CONDUCTEUR POUR AUTOMOBILE

(30) Priorität: 18.04.2001 DE 10118903
(43) Veröffentlichungstag der Anmeldung: 21.01.2004
(73) Patentinhaber: ROBERT BOSCH GMBH, 70442 Stuttgart (DE)
(72) Erfinder: WEILKES, Michael, 74343 Sachsenheim (DE); UHLER, Werner, 76646 Bruchsal (DE)
(86) Internationale Anmeldenummer: PCT/DE2002/001287
(87) Internationale Veröffentlichungsnummer: WO 2002/084329

(56) Entgegenhaltungen:
- EP-A- 0 728 624
- WO-A-00/73818
- WO-A-98/15436
- US-A- 5 732 785
- US-A- 5 835 007
- WELLER J: "Vorausschauende Sensorik fuer zukuenftige Sicherheitssysteme" , INNOVATIVER KFZ-INSASSEN- UND PARTNERSCHUTZ. TAGUNG BERLIN, SEPT. 30 - OKT. 1, 1999, VDI BERICHTE 1471, DUESSELDORF: VDI VERLAG GMBH, DE, VOL. 471, PAGE(S) 229-236 XP002203527 ISBN: 3-18-091471-8 das ganze Dokument

## Beschreibung

### Stand der Technik

Die vorliegende Erfindung betrifft ein Fahrerassistenzsystem für ein Kraftfahrzeug mit wenigstens einem Sensor zum Erfassen der Entfernung des Fahrzeuges von einem Objekt und einer Steuereinheit zum Ansteuern von Funktionsgruppen des Kraftfahrzeuges in Abhängigkeit vom Erfassungsergebnis des Sensors, das für eine Mehrzahl von Anwendungen geeignet ist.

Fahrerassistenzsysteme für Kraftfahrzeuge haben beispielsweise im wesentlichen drei Anwendungsgebiete.

Ein erstes ist die sogenannte Pre-crash-Steuerung, die darauf abzielt, das unmittelbare Bevorstehen einer Kollision des Fahrzeuges mit einem Objekt zu erkennen und noch kurz vor dem tatsächlichen Eintritt der Kollision InsassenSicherungssysteme des Fahrzeuges zu aktivieren oder zu präkonditionieren, um die Insassen so bestmöglich vor den Folgen des Unfalles zu schützen.

Ein zweites Anwendungsgebiet ist die sogenannte Einparkhilfe. Aufgabe von Einparkhilfesystemen ist es, in unübersichtlichen Situationen bei langsamer Fahrt des Fahrzeuges Objekte in unmittelbarer Nähe des Fahrzeuges zu erfassen und dem Fahrer anzuzeigen, mit denen dieses zusammenstoßen könnte.

Eine dritte Anwendung sind Geschwindigkeitsregelsysteme, auch als Adaptive Cruise Control (ACC) bekannt, die dazu dienen, beim Kolonnenfahren den Abstand zu benachbarten Fahrzeugen zu erfassen und die Geschwindigkeit des Fahrzeuges an die eines benachbarten anzupassen, um so bei dichtem Verkehr eine Entlastung des Fahrers zu ermöglichen.

Zwar ist diesen drei Anwendungen gemein, dass ihre Implementierung jeweils wenigstens einen Sensor zum Erfassen der Entfernung des Fahrzeuges von einem Objekt und eine Steuereinheit zum Ansteuern von Funktionsgruppen des Fahrzeuges in Abhängigkeit vom Erfassungsergebnis des Sensors erfordert, dennoch ist es schwierig, mehrere dieser Anwendungen in einem einheitlichen System so zu integrieren, dass der Nutzen dieser mehreren Systeme dem Fahrer tatsächlich ohne Einschränkungen zur Verfügung steht.

Der Grund hierfür ist, dass die Anforderungen der drei Anwendungen an die von der Steuereinheit benötigten Erfassungsergebnisse des Sensors sowie die räumliche Ausdehnung des zu überwachenden Bereichs stark unterschiedlich sind. So werden z.B. in der Einparkhilfe-Betriebsart Abstandsinformationen für einen Entfernungsbereich von im allgemeinen weniger als 1,5 m benötigt, zu deren Erfassung relativ lange Zeitspannen von mehreren 10 Millisekunden zur Verfügung stehen, andererseits muss die Entfernungsauflösung dieser Erfassungsergebnisse im Bereich von 10 cm oder darunter liegen. Der zu überwachende räumliche Bereich umfasst nicht nur den Bereich vor und hinter dem Fahrzeug in Verlängerung der Fahrzeugsmittelachse, sondern auch weit abseits von dieser Achse, da beim Einparken im allgemeinen enge Kurven gefahren werden und ein Fahrzeug daher auch mit Objekten kollidieren kann, die sich neben ihm oder vor und hinter ihm abseits seiner momentanen Fahrtrichtung befinden. Für ein ACC-System liegt der interessierende Entfernungsbereich zwischen einigen Metern bis wenige 10 m vor dem Fahrzeug. Bei einem Pre-crash-System ist es grundsätzlich wünschenswert, jede Richtung zu überwachen, aus der sich ein potentiell gefährliches Objekt nähern könnte. Der interessierende Entfernungsbereich ist sehr weit gespannt, da ein potentiell gefährliches Objekt in Abhängigkeit von seiner Eigengeschwindigkeit und der des Fahrzeuges nach Möglichkeit bereits in einem Abstand von bis zu mehreren 10 Metern erfasst und überwacht werden sollte, andererseits werden auch bei geringen Entfernungen genaue Messungen benötigt, um den tatsächlichen Aufprallzeitpunkt exakt vorhersagen zu können, und um gewährleisten zu können, dass die Sicherheitssysteme nicht unbeabsichtigt aktiviert werden, wenn das Fahrzeug an einem als gefährlich erkannten und von dem Pre-crash-System überwachten Objekt lediglich nahe vorbeifährt, ohne mit ihm zusammenzustoßen.

Diese unterschiedlichen Anforderungen führen dazu, dass Fahrerassistenzsysteme im allgemeinen nur für eines der genannten Anwendungsgebiete konzipiert werden. Es wäre zwar denkbar, ein Fahrerassistenzsystem zu schaffen, das zwischen einer Mehrzahl von Betriebsarten vom Fahrer umschaltbar ist, die den genannten Anwendungen entsprechen, dies hätte jedoch den erheblichen Nachteil, dass zu jedem Zeitpunkt nur eines der drei Sicherungssysteme zur Verfügung steht. Das heißt, wenn ein solches Fahrerassistenzsystem für eine ACC-Steuerung verwendet wird, stünde eine Pre-crash-Sicherung nicht zur Verfügung, und umgekehrt. Ein Gefahrenmoment ergäbe sich bei einem solchen System insbesondere auch, wenn ein Fahrer vergisst, je nach aktueller Fahrsituation die jeweils geeignete Betriebsart auszuwählen und sich dadurch in einer Sicherheit wähnt, die tatsächlich nicht besteht.

Die WO 00/73818 A zeigt verschiedene, Objektdetektoren mit unterschiedlicher Reichweite. Diese Objekt detektoren, d. h. die Mehrzahl der Objektdetektoren, werden für unterschiedliche Anwendungen verwendet, ohne dass weitere zusätzliche Sensoren notwendig sind. In Bezug auf die Unterscheidung verschiedener Betriebsmodi offenbart dieser Stand der Technik, dass z.B.,eine Einparkhilfefunktion durchgeführt wird, wenn ein Objekt in einem ersten Detektionsbereich, dass z.B. eine Precrashfunktion durchgeführt wird, wenn ein Objekt in einem zweiten Detektionsbereich, d.h. von unterschiedlichen Sensoren, erkannt wurde.

### Vorteile der Erfindung

Durch die vorliegende Erfindung wird ein Fahrerassistenzsystem für ein Kraftfahrzeug geschaffen, das es ermöglicht, trotz der oben genannten Schwierigkeiten einen Entfernungssensor für mehrere der genannten Anwendungen einzusetzen, ohne dass dies für die einzelnen Anwendungen zu Einbußen an Sicherheit führt. Erreicht wird dies bei einem erfindungsgemäßen Fahrerassistenzsystem zum einen dadurch, dass dessen Steuereinheit zwischen einer Einparkhilfe-Betriebsart und einer Pre-crash-Betriebsart abhängig von der Geschwindigkeit des Fahrzeuges umschaltbar ist. Bei langsamer Fahrt, die für eine Einparksituation typisch ist, bei der aber im Fall einer Kollision das Verletzungsrisiko für die Insassen relativ gering ist, wird dieses Fahrerassistenzsy-stem in der Einparkhilfe-Betriebsart betrieben, bei höheren Geschwindigkeiten hingegen in der Pre-crash-Betriebsart.

Zu den in der Einparkhilfe-Betriebsart angesteuerten Funktionsgruppen können eine Warnvorrichtung, die den Fahrer vor einem bevorstehenden Zusammenstoß mit einem Hindernis warnt, oder eine Bremse gehören, die vom Fahrerassistenzsystem automatisch betätigt wird, um das Fahrzeug noch vor dem Zusammenstoß mit dem Hindernis zum Stehen zu bringen.

Zu den in der Pre-crash-Betriebsart angesteuerten Funktionsgruppen gehören vorzugsweise Insassen-Sicherheitssysteme wie etwa ein Gurtstraffer, ein Prallsack und, bei offenen Fahrzeugen, ein Überrollbügel.

Zweckmäßig ist auch eine Fähigkeit der Steuereinheit, abhängig von einer erfassten Bewegung eines Objektes relativ zu dem Fahrzeug von der Einparkhilfe-Betriebsart in die Pre-crash-Betriebsart zu wechseln. Wenn sich z.B. herausstellt, dass ein in der Einparkhilfe-Betriebsart in der Nähe des Fahrzeuges erfasstes Objekt eine schnelle Eigenbewegung aufweist, können so die Insassensicherungssysteme noch vor einem Zusammenprall aktiviert werden.

Die oben erwähnten Vorteile werden ferner dadurch erreicht, dass die Steuereinheit zwischen einer Geschwindigkeitsregelungsbetriebsart und einer Pre-crash-Betriebsart abhängig von einer von dem Sensor gemessenen Bewegung eines Objektes relativ zu dem Fahrzeug umschaltbar ist. Auf diese Weise werden die Sicherungsfunktionen der Pre-crash-Betriebsart auch verfügbar gemacht, wenn sich das Fahrzeug in einem geschwindigkeitsgeregelten Betriebszustand befindet.

Zweckmäßigerweise ist die Umschaltung in die Pre-crash-Betriebsart zeitweilig, so dass, wenn eine Gefahrensituation vorüber ist, die zur Umschaltung in die Pre-Cash-Betriebsart geführt hat, das System so schnell wie möglich in die Geschwindigkeitsregelungs-Betriebsart zurückkehrt.

Die Zeitspanne, über die im Falle einer solchen Umschaltung die Pre-crash-Betriebsart mindestens beibehalten wird, wird zweckmäßigerweise von der Steuereinheit anhand der Fahrzeuggeschwindigkeit und der gemessenen Entfernung zu dem Objekt festgelegt. Nach Verstreichen dieser Zeitspanne prüft die Steuereinheit, ob die Voraussetzungen für die Umschaltung in die Pre-crash-Betriebsart fortbestehen oder nicht und kehrt ggf. in die Geschwindigkeitsregelungs-Betriebsart zurück.

Im Normalbetrieb des Fahrerassistenzsystems führt die Steuereinheit vorzugsweise zyklisch eine Entscheidung darüber durch, ob eine Umschaltung zwischen den Betriebsarten notwendig ist. Wenn in der Pre-crash-Betriebsart ein potentiell gefährliches Objekt erfasst ist und gewissermaßen "unter Beobachtung steht", können diese zyklischen Entscheidungen ausgesetzt werden, um Verarbeitungszeit einzusparren.

Weitere Merkmale und Vorteile der Erfindung ergeben sich aus der nachfolgenden Beschreibung von Ausführungsbeispielen der Erfindung mit Bezug auf die beigefügten Zeichnungen. Es zeigen:
- Fig. 1: eine schematische Draufsicht auf ein Fahrzeug mit einer Mehrzahl von Entfernungssensoren, auf das die vorliegende Erfindung anwendbar ist;
- Fig. 2: ein Blockdiagramm des Fahrerassistenzsystems; und
- Figs. 3-5: Flussdiagramme von Arbeitsverfahren der Steu- ereinheit.

### Beschreibung der bevorzugten Ausführungsbeispiele

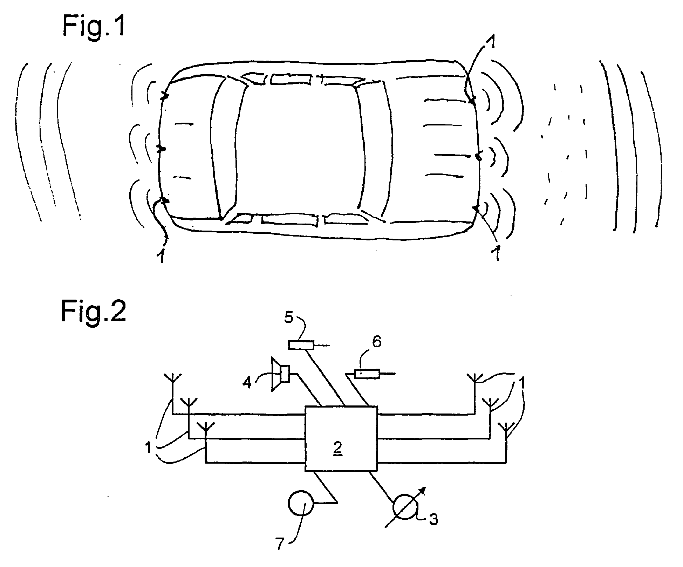

Figur 1 zeigt in einer Draufsicht ein Kraftfahrzeug, das mit einer Mehrzahl von Entfernungssensoren 1, beispielsweise in 24 GHz-Radartechnik, ausgestattet ist, die an mehreren Orten an Front und Heck des Fahrzeuges angeordnet sind.

Die Sensoren 1 senden z.B. jeweils Funkimpulse aus und zeichnen deren von Objekten in der Umgebung des Fahrzeuges zurückgeworfene Echos auf. Anhand der Laufzeiten der unterschiedlichen Beiträge der empfangenen Echos ist eine an die Sensoren 1 angeschlossene Steuereinheit 2 (siehe Figur 2) in der Lage, die Entfernung des Fahrzeuges von diversen in dessen Umgebung befindlichen Objekten zu berechnen. An die Steuereinheit 2 sind ferner mindestens ein Sensor 3 für die Geschwindigkeit des Fahrzeuges, eine in der Fahrgastzelle des Fahrzeuges montierte akustische oder optische Warnvorrichtung 4 sowie Aktoren 5, 6 zum Einwirken auf die Bremse bzw. die Motorleistung des Fahrzeuges angeschlossen. Schließlich sind noch schematisch mit dem Bezugszeichen 7 bezeichnete Sicherheitseinrichtungen wie etwa Gurtstraffer, Airbag-Zünder oder, falls es sich bei dem Fahrzeug um ein Cabriolet handelt, ein Ausklappmechanismus für einen Überrollbügel an die Steuereinheit 2 angeschlossen.

Die Steuereinheit 2 verfügt über wenigstens zwei unterschiedliche Betriebsarten, die unter einer Pre-crash-Betriebsart, einer Einparkhilfe-Betriebsart und einer Geschwindigkeitsregelungs-Betriebsart ausgewählt sind.

In der Einparkhilfe-Betriebsart betreibt die Steuereinheit 2 die Sensoren 1 jeweils unabhängig voreinander. Ein von einem Sensor 1 im wesentlichen ungerichtet in den Bereich vor bzw. hinter dem Fahrzeug ausgestrahlter Radarimpuls trifft, sofern vorhanden, auf Objekte, die Echos zurückwerfen, die von den Sensoren 1 aufgefangen werden. In Kenntnis des Sensors 1, der den Impuls gesendet hat, und der Laufzeiten der diversen Echokomponenten zu den verschiedenen Sensoren 1 ist die Steuereinheit 2 in der Lage, sowohl die Entfernung eines Objektes von dem Fahrzeug als auch den Winkel abzuschätzen, den das Objekt relativ zu einer Referenzrichtung des Fahrzeuges, z.B. seiner Fahrtrichtung, einnimmt. Unterschreitet die gemessene Entfernung in einer Richtung, in die sich das Fahrzeug bewegt, eine erste kritische Grenze, so wird über die Warnvorrichtung 4 ein Warnsignal an den Fahrer ausgegeben. Unterschreitet die Entfernung eine zweite kritische Grenze, so betätigt die Steuereinheit 2 den Aktor 5, um das Fahrzeug abzubremsen und einen Zusammenstoß mit dem Objekt zu verhindern.

In der Geschwindigkeitsregelungs- oder ACC-Betriebsart senden die Sensoren 1 an der Frontpartie des Fahrzeuges jeweils Impulse, um es der Steuereinheit 2 zu ermöglichen, durch Einwirken auf die Aktoren 5 oder 6 die Geschwindigkeit des Fahrzeuges an die des vorausfahrenden anzupassen, ohne dass es zu einem Zusammenstoß kommt.

In der Pre-crash-Betriebsart können zum einen ebenfalls die Sensoren 1 betrieben werden. Wenn ein potentiell gefährliches Objekt erkannt worden ist, kann es notwendig sein, in einen Einzelbetrieb der Sensoren 1 ähnlich dem der Einparkhilfe-Betriebsart umzuschalten, um eine zweidimensionale Ortsinformation über das Objekt zu erhalten und so seine Bewegung relativ zum Fahrzeug zu verfolgen und seine Gefährlichkeit abschätzen zu können. Diese Art der Steuerung der Sensoren schließt eine gleichzeitige Nutzung der Sensormessergebnisse für ACC-Betrieb aus. Wenn diese Verfolgung zu dem Ergebnis führt, dass ein Zusammenstoß mit dem Objekt nicht mehr zu verhindern ist, betätigt die Steuereinheit die Sicherheitseinrichtungen 7.

Außerdem kann vorgesehen werden, dass in der Pre-Crash-Betriebsart zyklisch ungerichtete Impulse ausgesendet werden, um Objekte zu erfassen, die sich dem Fahrzeug aus anderen Richtungen als der Fahrtrichtung nähern.

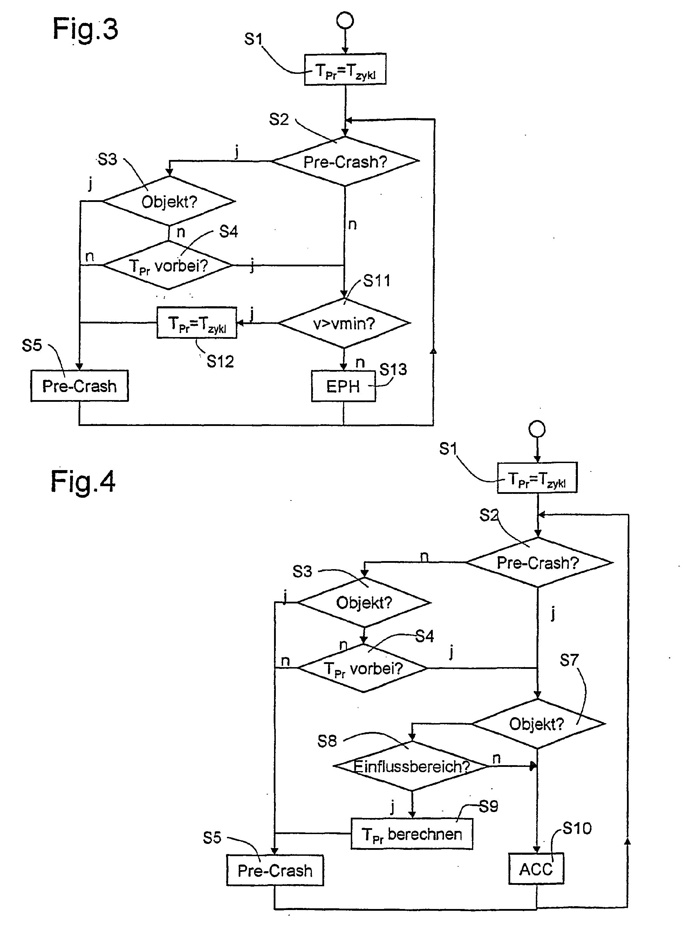

Aufgrund der unterschiedlichen Überwachungsbereiche der verschiedenen Betriebsarten und ihrer unterschiedlichen Anforderungen an die Sensoren 1, können die diversen Betriebsarten nicht zeitgleich, sondern allenfalls in zeitlichem Wechsel gefahren werden. Die Flussdiagramme der Figuren 3 bis 5 veranschaulichen Verfahren, die von der Steuereinheit 2 zum Festlegen der jeweils angemessenen Betriebsart durchgeführt werden.

Figur 3 betrifft den Fall eines Fahrerassistenzsystems mit zwei Betriebsarten, Pre-crash und Einparkhilfe.

In einem ersten Schritt S1 des Verfahrens, wird eine Dauer T_{Pr} der Pre-Crash-Betriebsart festgelegt, auf deren Bedeutung unten eingegangen wird. Dann wird in Schritt S2 überprüft, welches die momentan aktive Betriebsart der Steuereinheit ist. Im Falle der Pre-crash-Betriebsart wird in Schritt S3 entschieden, ob eine zuvor mit den Sensoren 1 durchgeführte Messung ein gefährliches Objekt im Erfassungsbereich ergeben hat. Wenn ja, so verzweigt die Verarbeitung direkt zum Schritt S5, in dem eine weitere Messung in der Pre-crash-Betriebsart durchgeführt und ausgewertet wird und in Abhängigkeit von den Auswertungsergebnissen evtl. die Sicherheitseinrichtungen 7 aktiviert werden.

Wenn die Überprüfung des Schrittes S3 ergibt, dass kein potentiell gefährliches Objekt sich im Erfassungsbereich befindet, so wird in Schritt S4 überprüft, ob die in Schritt S1 vorgegebene Dauer T_{Pr} der Pre-crash-Betriebsart verstrichen ist. Wenn nein, so wird unterstellt, dass, auch wenn das gefährliche Objekt momentan nicht erfassbar ist, die dadurch bewirkte Gefahrensituation nicht überwunden ist, und das Verfahren verzweigt wiederum zu Schritt S5, um eine Messung durchzuführen.

Wenn die Zeitdauer T_{Pr} verstrichen ist, verzweigt das Verfahren von Schritt S4 zu Schritt S11, in dem die aktuelle Geschwindigkeit des Fahrzeuges mit einer vorgegebenen Grenzgeschwindigkeit vₘᵢₙ verglichen wird. Überschreitet die Fahrzeuggeschwindigkeit v diese Grenzgeschwindigkeit, so wird in Schritt S12 die Dauer der Pre-crash-Betriebsart um einen weiteren Zyklus T_{Pr} = T_{zykl} verlängert, und wiederum wird in Schritt S5 eine Pre-crash-Messung durchgeführt.

Wenn sich in Schritt S11 ergibt, dass die Fahrzeuggeschwindigkeit unter der Grenzgeschwindigkeit vₘᵢₙ liegt, so wird unterstellt, dass sich das Fahrzeug in einer Einpark- oder Rangiersituation befindet, und das Verfahren geht über zu Schritt S13, in dem eine Messung in der Einparkhilfe-Betriebsart ausgeführt wird.

Jeweils nach Durchführung einer Messung in Schritt S5 oder Schritt S13 kehrt das Verfahren zum Entscheidungsschritt S2 zurück.

Beim Flussdiagramm der Figur 4 wird davon ausgegangen, dass das Fahrerassistenzsystem über die Betriebsarten Pre-crash und Geschwindigkeitsregelung (ACC) verfügt. Die Schritte S1 bis S5 dieses Verfahrens sind mit denen der Figur 3 identisch und brauchen nicht erneut erläutert zu werden.

Wenn in Schritt S2 festgestellt wird, dass das System sich nicht in der Pre-crash-Betriebsart befindet, so wird in Schritt S7 in ähnlicher Weise wie in Schritt S3 anhand von vorhergehenden Messungen ermittelt, ob sich im Erfassungsbereich ein potentiell gefährliches Objekt befindet. Diese Entscheidung kann anhand der gemessenen Entfernung eines Objektes sowie anhand von dessen Relativgeschwindigkeit in Bezug auf das Fahrzeug getroffen werden, die durch Vergleich aufeinanderfolgender Messungen oder durch Dopplerverschiebung des Echos ermittelt werden kann. Da die örtlichen Erfassungsbereiche, in denen die verschiedenen Betriebsarten Objekte wahrnehmen, unterschiedlich sein können, schließt sich im Fall der Erfassung eines potentiell gefährlichen Objektes in Schritt S8 noch die Entscheidung an, ob das Objekt in dem für die Pre-crash-Betriebsart sicherheitsrelevanten Bereich liegt. Wenn ja, so berechnet die Steuereinheit in Schritt S9 anhand der gemessenen Entfernung des Objektes sowie der Relativgeschwindigkeiten des Fahrzeuges und des Objektes bzw. der Geschwindigkeit des Fahrzeuges eine Zeitspanne T_{Pr}, während der der Pre-crash-Modus mindestens aufrechterhalten bleiben sollte, um das Objekt so lange zu überwachen, bis es voraussichtlich den für die Pre-crash-Betriebsart sicherheitsrelevanten Bereich wieder verlassen hat. Nachdem diese Zeitspanne festgelegt worden ist, wird in Schritt S5 eine Pre-crash-Messung durchgeführt, und derartige Messungen werden wenigstens so lange zyklisch wiederholt, bis in Schritt S4 festgestellt wird, dass die festgelegte Zeitspanne T_{Pr} verstrichen ist.

Wenn in Schritt S7 kein sicherheitsrelevantes Objekt gefunden wird, verzweigt das Verfahren zu Schritt S10, in dem eine Messung in der Geschwindigkeitsregelungs-Betriebsart ACC durchgeführt wird.

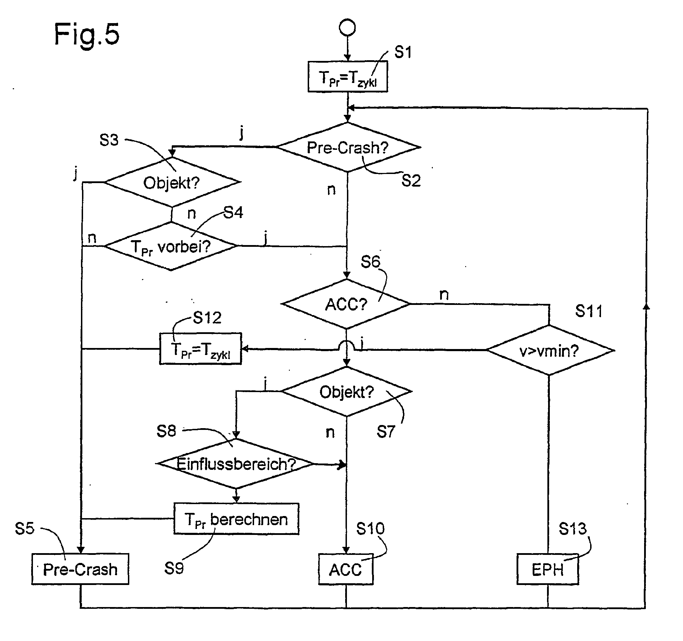

Wie in Figur 5 gezeigt, können im Falle eines Fahrerassistenzsystems, das alle drei Betriebsarten beherrscht, die oben mit Bezug auf Figuren 3 und 4 beschriebenen Schritte S1 bis S13 unter Hinzufügung eines Schritts S6, in dem je nachdem, ob der Fahrer des Fahrzeugs die Geschwindigkeitsregelungsbetriebsart gewählt hat oder nicht, zu Schritt S7 oder S11 verzweigt, zu einem einheitlichen Verfahren zusammengefügt werden. So ist gewährleistet, dass jeweils angepasst an die aktuelle Fahrsituation eines Fahrzeuges hinsichtlich Geschwindigkeit und Bedrohung durch externe Objekte die jeweils bestangemessene unter den drei Betriebsarten automatisch ausgewählt wird.

Durch die Reihenfolge der Entscheidungsschritte S2, S6, S11 wird hier erreicht, dass in einer Gefahrensituation, d.h. wenn zuvor die Pre-Crash-Betriebsart von der Steuereinheit 2 für die Zeitdauer T_{Pr} gewählt worden ist, das System ausschließlich in der Pre-Crash-Betriebsart arbeitet, ohne dass Verarbeitungszeit der Steuereinheit 2 für die Schritte S6, S11 verlorengeht, wohingegen wenn sich das System in einer der zwei anderen Betriebsarten befindet, in jedem Arbeitszyklus des Verfahrens eine Neuentscheidung über die jeweils zu verwendende Betriebsart stattfindet.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Die Schritte S7 bis S9 sind z.B. im Falle einer Kombination von EPH, ACC und Pre-Crash auch nach S11 durchführbar.

## Patentansprüche

1. Fahrerassistenzsystem für ein Kraftfahrzeug mit wenigstens einem Sensor (1) zum Erfassen der Entfernung und/oder der Differenzgeschwindigkeit des Fahrzeugs von einem Objekt und mindestens einer Steuereinheit (2) zum Ansteuern von Funktionsgruppen des Kraftfahrzeugs in Abhängigkeit vom Erfassungsergebnis des wenigstens einen Sensors, **dadurch gekennzeichnet, dass** die Steuereinheit (2) zwischen einer Einparkhilfe-Betriebsart (S13) und einer Pre-Crash-Betriebsart (S13) abhängig von der Geschwindigkeit des Fahrzeugs (S11) umgeschaltet wird.

2. Fahrerässistenzsystem nach Anspruch 1, **dadurch gekennzeichnet, dass** die in der Einparkhilfe-Betriebsart angesteuerten Funktionsgruppen eine Warnvorrichtung (4) zum Erzeugen eines Wärnsignals und/oder eine Bremse (5) umfassen.

3. Fahrerassistenzsystem nach Anspruch 1 oder 2, **dadurch gekennzeichnet, dass** die in der Pre-Crash-Betriebsart angesteuerten oder beeinflußten Funktionsgruppen (7) einen Gurtstraffer, einen Prallsack, einen Überrollbügel und/oder sonstige Rückhaltesysteme umfassen.

4. Fahrerassistenzsystem nach einem der vorhergehenden Ansprüche, **dadurch gekennzeichnet, dass** die Steuereinheit (2) in der Lage ist, abhängig von einer erfassten Bewegung und/oder Position eines Objekts (S7) relativ zu dem Fahrzeug von der Einparkhilfe-Betriebsart (S13) in die Pre-Crash-Betriebsart (S5) zu wechseln.

5. Fahrerassistenzsystem für ein Kraftfahrzeug, mit wenigstens einem Sensor (1) zum Erfassen der Entfernung und/oder der Differenzgeschwindigkeit des Fahrzeugs von einem Objekt und einer Steuereinheit (2) zum Ansteuern von Funktionsgruppen des Kraftfahrzeugs in Abhängigkeit vom Erfassungsergebnis des Sensors (1), nach einem der vorhergehenden Ansprüche, **dadurch gekennzeichnet, dass** die Steuereinheit (2) zwischen einer Geschwindigkeitsregelungs-Betriebsart (S10) und einer Pre-Crash-Betriebsart (S5) abhängig von einer von dem Sensor gemessenen Bewegung und/oder Position eines Objekts relativ zu dem Fahrzeug umschaltbar (S7) ist.

6. Fahrerassistenzsystem nach Anspruch 5, **dadurch gekennzeichnet, dass** die Umschaltung (S7) in die Pre-Crash-Betriebsart zeitweilig ist.

7. Fahrerassistenzsystem nach Anspruch 6, **dadurch gekennzeichnet, dass** die Steuereinheit (2) in der Läge ist, eine Zeitspanne, in der die Pre-Crash-Betriebsart mindestens beibehalten wird, anhand der Fahrzeuggeschwindigkeit und der gemessenen Entfernung zu dem Objekt festzulegen (S9)

8. Fahrerassistenzsystem nach einem der vorhergehenden Ansprüche, **dadurch gekennzeichnet, dass** die Steuereinheit (2) zyklisch eine Entscheidung (S6, S11) über die Umschaltung zwischen den Betriebsarten trifft.

9. Fahrerassistenzsystem nach Anspruch 8, **dadurch gekennzeichnet, dass** die Steuereinheit (2) in der Lage ist, die zyklischen Entscheidungen aufzusetzen, wenn in der Pre-Crash-Betriebsart ein potentiell gefährliches Objekt erfasst ist.

## Claims

1. Driver assist system for a motor vehicle, having at least one sensor (1) for detecting the distance and/or the differential speed of the vehicle from an object and at least one control unit (2) for actuating function groups of the motor vehicle as a function of the detection result of the at least one sensor, **characterized in that** the control unit (2) is switched over between a parking aid operating mode (S13) and a pre-crash operating mode (S13) as a function of the speed of the vehicle (S11).

2. Driver assist system according to Claim 1, **characterized in that** the function groups which are actuated in the parking aid operating mode comprise a warning device (4) for generating a warning signal and/or a brake (5).

3. Driver assist system according to Claim 1 or 2, **characterized in that** the function groups (7) which are actuated or influenced in the pre-crash operating mode comprise a seat belt tensioner, an impact bag, a rollover bar and/or other restraint systems.

4. Driver assist system according to one of the preceding claims, **characterized in that** the control unit (2) is capable of changing from the parking aid operating mode (S13) into the pre-crash operating mode (S5) as a function of a detected movement and/or position of an object (S7) relative to the vehicle.

5. Driver assist system for a motor vehicle, having at least one sensor (1) for detecting the distance and/or the differential speed of the vehicle from an object and a control unit (2) for actuating function groups of the motor vehicle as a function of the detection result of the sensor (1), according to one of the preceding claims, **characterized in that** the control unit (2) can be switched over between a cruise control operating mode (S10) and a pre-crash operating mode (S5) as a function of a movement and/or position of an object relative to the vehicle, which is measured by the sensor.

6. Driver assist system according to Claim 5, **characterized in that** the switching over (S7) into the pre-crash operating mode is temporary.

7. Driver assist system according to Claim 6, **characterized in that** the control unit (2) is capable of defining (S9) a time period in which the pre-crash operating mode is at least maintained, on the basis of the speed of the vehicle and the measured distance from the vehicle.

8. Driver assist system according to one of the preceding claims, **characterized in that** the control unit (2) cyclically makes a decision (S6, S11) about the switching over between the operating modes.

9. Driver assist system according to Claim 8, **characterized in that** the control unit (2) is capable of omitting the cyclical decisions if a potentially hazardous object is detected in the pre-crash operating mode.

## Revendications

1. Système d'assistance au conducteur d'un véhicule automobile, qui présente
au moins un détecteur (1) qui détecte la distance et/ou la différence de vitesse entre le véhicule et un objet et
au moins une unité de commande (2) qui commande des groupes fonctionnels du véhicule automobile en fonction du résultat de la détection par le ou les détecteurs,
**caractérisé en ce que**
l'unité de commande (2) peut être commutée en fonction de la vitesse du véhicule (S11) entre un mode de fonctionnement (S13) en assistance au stationnement et un mode de fonctionnement (S13) de pré-collision.

2. Système d'assistance au conducteur selon la revendication 1, **caractérisé en ce que** les groupes fonctionnels commandés en mode de fonctionnement d'assistance au stationnement comprennent un dispositif d'avertissement (4) qui forme un signal d'avertissement et/ou un frein (5).

3. Système d'assistance au conducteur selon la revendication 1 ou 2, **caractérisé en ce que** les groupes fonctionnels (7) commandés ou influencés en mode de fonctionnement de pré-collision comprennent un tendeur de ceinture, un coussin gonflable de sécurité, un étrier de protection contre les tonneaux et/ou d'autres systèmes de retenue.

4. Système d'assistance au conducteur selon l'une des revendications précédentes, **caractérisé en ce que** l'unité de commande (2) est en mesure de passer du mode de fonctionnement (S13) d'assistance au stationnement au mode de fonctionnement (S5) de pré-collision en fonction de la détection d'un déplacement et/ou de la position d'un objet (S7) par rapport au véhicule.

5. Système d'assistance au conducteur d'un véhicule automobile, qui présente
au moins un détecteur (1) qui détecte la distance et/ou la différence de vitesse entre le véhicule et un objet et
une unité de commande (2) qui commande des groupes fonctionnels du véhicule automobile en fonction du résultat de la détection par le détecteur (1) selon l'une des revendications précédentes,
**caractérisé en ce que**
l'unité de commande (2) peut être commutée (S7) entre un mode de fonctionnement (S10) de régulation de vitesse et un mode de fonctionnement (S5) de pré-collision en fonction d'un déplacement et/ou d'une position, mesurés par le détecteur, d'un objet par rapport au véhicule.

6. Système d'assistance au conducteur selon la revendication 5, **caractérisé en ce que** la commutation (S7) en le mode de fonctionnement de pré-collision est temporaire.

7. Système d'assistance au conducteur selon la revendication 6, **caractérisé en ce que** l'unité de commande (2) est en mesure de définir (S9) une durée au cours de laquelle le mode de fonctionnement de pré-collision est au moins maintenu, à l'aide de la vitesse du véhicule et de la distance mesurée par rapport à l'objet.

8. Système d'assistance au conducteur selon l'une des revendications précédentes, **caractérisé en ce que** l'unité de commande (2) décide cycliquement (S6, S11) de la commutation entre les modes de fonctionnement.

9. Système d'assistance au conducteur selon la revendication 8, **caractérisé en ce que** l'unité de commande (2) est en mesure d'interrompre les décisions cycliques si un objet potentiellement dangereux est détecté en mode de fonctionnement de pré-collision.
